# EUROPEAN PATENT SPECIFICATION

(11) **EP 1 078 346 B1**
(45) Date of publication and mention of the grant of the patent: **10.04.2002**
(21) Application number: 99920790.5
(22) Date of filing: 27.04.1999
(51) Int. Cl.: G01C 21/20

(54) **METHOD FOR GENERATING AND INTERPRETING A LOCATION REFERENCE INSTANCE WITHIN A DIGITAL MAP**
VERFAHREN ZUR ERZEUGUNG UND INTERPRETATION EINER POSITIONSREFERENZ FÜR EINE DIGITALE KARTE
PROCEDE SERVANT A GENERER ET A INTERPRETER UNE INSTANCE DE REFERENCE D'EMPLACEMENT A L'INTERIEUR D'UNE CARTE NUMERIQUE

(30) Priority: 28.04.1998 EP 98107675
(43) Date of publication of application: 28.02.2001
(73) Proprietor: Tele Atlas Deutchland GmbH, 31139 Hildesheim (DE)
(72) Inventor: DORENBECK, Claus, D-30938 Burgwedel (DE)
(74) Representative: Jorritsma, Ruurd
(86) International application number: EP9902820
(87) International publication number: WO9956264

(56) References cited:
- EP-A- 0 798 540
- US-A- 4 677 561
- US-A- 5 107 433
- US-A- 5 289 195
- US-A- 5 635 953

## Description

In the area of traffic and telematics applications the exchange of information relating to geographic phenomena has been difficult due to the low bandwidth (transmission capacity) of transmission media available. This has become quite obvious with the development of RDS/IMC (Radio Data System/Traffic Message Channel) services. In order to relate any information on a specific part of a road network, the information itself and the affected location, i.e. intersection, stretch of road, etc., has to be communicated. The combination of information and location, as well as time, is commonly referred to as message. Since the available bandwidth for transmission is very limited, messages have been coded. The chosen coding approach for locations is straight forward: a unique code is given to the location. This is an arbitrarily chosen number or identifier which is assigned to specific, predefined locations. Several restrictions have been accepted with this approach:
- The set of locations which can be referenced is limited to the set which has been precoded and distributed in a look-up table.
- The code can only be decoded with a look-up table.
- Transmitter and receiver rely on exactly the same look-up table to decode a location.
- The code does usually not reveal any information about the geographic area being affected.
- Codes have to be maintained centrally, often on a national level.

Pre-defined location codes are very often limited to serve a specific application, e.g.: traffic information service.

EP 0798540 A1 describes a method for referencing fixed objects. Nodes within a grid structure are coded. With a reversible algorithm the nodes can be converted into a geographical coordinate system.

US 5107433 describes a method for inputting starting and destination points into a navigation system. Data of street maps comprise a street identification character and reference point coordinates. In a data storage inputted data is searched. When there is an agreement the coordinates are taken over for navigation.

Current technology allows to store geographic maps in computer systems. A geographic map being stored in a computer system will be referred to as digital map or digital map databases. The content of a digital map can be described as objects having a specific location in space. The location of an object in a digital map is usually described by means of a co-ordinate system, being a mathematical model referring to the x and y axis in space. Additionally such an object carries attributes describing it in terms of a name and other specific features. The union of attributes and location are an object in a digital map.

Digital maps are produced for a wide range of applications. Standardisation efforts of digital maps have been limited to data models for specific applications, such as the GDF [1] data model which is a CEN standard developed for and used in traffic and telematics applications. Various organisations produce digital maps according to the GDF standard. However, there are some variations with respect to the level of detail and the content actually being captured. This results in the inevitable fact that even though digital maps are according to GDF they can/do slightly differ depending on the producing organisation.

Most in-vehicle navigation systems use digital maps which have been captured according to GDF 3.0. In order to use the above mentioned approach on referring to a specific location (e.g. an intersection) within the RDS/TMC service, a digital map producer would have to store the codes being assigned to any predefined location in attributes of the corresponding objects. This results in a dependency of every map producer on the availability of the look-up table which contains the official code and the appropriate full description of the object.

Another method of location reference has been developed by the ERTICO Committee on Location Referencing [2]. The proposed method is called "Detailed Location Referencing (DLR) based on Intersection Location (ILOC)". Intersections in road networks are considered as the basic elements of reference. An ILOC is defined as an intersection identified by its centre co-ordinates and the first 5 characters names or road numbers of three of the intersecting roads. Every reference made is limited to the road network, which can be described by a single ILOC or combinations of ILOCs. Reference to other objects in a digital map is not possible.

### Summary of the Invention

It is an object of the present invention to provide a method for generating a location reference instance within a digital map which allows a more efficient and universal form of referencing.

This object is achieved by the method according to claim 1.

The method of the invention allows to refer to objects independent of their positions within a digital map. According to the steps of claims 1 to 4 an efficient location referencing is achieved not limited by specific data structures or applications or predefined codes due to a strict differentiation between the positions and descriptors/attributes of an object as well as applying object-oriented data modelling.

In contrast to the aforementioned patent citations an object is not only referenced (coded) by a position but also by an object class and by a descriptor.

### Brief Description of the Drawings

Figure 1 shows a flow chart of the method for generating a location reference instance,
Figure 2 shows a flow chart of verifying the location reference instance.

### Description of the preferred embodiments

According to the invention a spatial object tag (SPOT) approach is used. This spatial object tag (SPOT) approach on location reference is based on an object-oriented approach to data modelling. The fundamental construct of object-orientation is the object which combines data structure and behaviour in a single entity. For better understanding, the following definitions are given:
- Object:: In this context an object refers to a geographic phenomena (e.g. a road, an intersection, etc.) described in terms of a position and attributes. An object can consist of several other objects (e.g. a set of road elements constitutes a road).
- Object class:: An object class represents a certain concept of reality. Object classes can be hierarchically ordered, i.e. an object class may belong to another object class if the represented concept is a refinement of the other. For example, intersections are an object class, further refinement of the object class intersection results in subclasses which may be freeway interchange and highway intersection.
- Location:: A location describes where a single occurrence of an object within a digital map is situated. A location is always associated with an object. The location of an object can be described in either a single position or a set of positions.
- Position:: A position is the precise description of space in terms of a co-ordinate system. A position is at least a pair of co-ordinates. A position itself does not relate to anything.
- Attribute:: : An attribute is either a number or text or a combination, describing an object, independent of its position.
- Location reference:: Location reference describes an object in a digital map in a very condensed form, i.e. coded, allowing to identify the same object in another digital map, while taking slight variations in position and presentation of the object into account.

The SPOT location reference method relies on the fact that an object in a digital map consists of two very different parts:
- The location of an object expressed as its position within the digital map.
- Attributes which describe the object regardless of its location.

Efficient location referencing, not limited by specific data structures or applications or predefined codes, is only possible if a strict differentiation between the position and the attributes of an object is made. Furthermore a classification of objects according to concepts applicable within traffic and telematic applications must be present. The classification needed for location referencing within traffic and telematic applications must be made upon doubtless information of reality.

When comparing a digital map from vendor A with one from vendor B, even if they are built according to the same principle (e.g. GDF) differences for precisely the same object can be noticed:

An object referring to the same geographic phenomena in reality may have different co-ordinates in different maps. The location of an object, i.e. its position, is described with co-ordinates. These co-ordinates are assigned to the object in the digitisation process. Digitisation can be done on the basis of a wide range of different sources such as satellite images, aerial photographs, topographic paper maps or cadastral paper maps. Since the resolution, i.e. the level of detail, of certain geographic phenomena differs with regard to the used source, the same object may be located at slightly different positions depending on the used source.

An object referring to the same geographic phenomena in reality may have different representations (different data models) in different digital maps. Even the GDF data model allows for variations on the representation of objects.

By means of location reference one has to describe a geographic phenomena represented as an object in a digital map and check/present the object representing the same geographic phenomena in a different digital map. This can be done in two different ways:

An object can be referred to by its name (e.g. street name). This may lead to a rather large set of objects satisfying the requested name. Significant additional effort is necessary in order to find exactly the one object in question. It may even be possible that the object being searched for can not be found due to missing or different relations within the queried digital map, even though it does exist within that digital map. Alternatively some sort of authority would have to assign a specific name or identifier to all objects that shall be referred. This approach is used for the generation of RDS-TMC location codes.

An object can be referred to by its position, i.e. the co-ordinates of the used digital map. Most likely this object will have different co-ordinates in another digital map, due to the digitisation process. A variation of this method would assign the position of an object to a co-ordinate of a fixed resolution. An object is assigned to the nearest co-ordinate of a fixed resolution co-ordinate system (e.g. 100m precise co-ordinate system). In case two objects would refer to the same co-ordinate, one is being shifted to another near by co-ordinate. This requires pre-assigning co-ordinates to objects (Reference to EP 0 798 540 A1 possible).

The existence of an object in a digital map depends on the capturing rules being applied. The accuracy of an object location depends on the capturing process. This implies that if a location shall be referenced it should be done by the position of the object instead of attributes of the object. It must be assumed that the transmitter of a location reference does not know, whether the receiver has the object in question or how exactly the object has to be referenced by means of attributes. Using the position of an object and allowing for a search area around the position in the receiving digital map grants an unambiguous solution.

The following prerequisites have to be considered. The object exists in reality. The object is either captured in a digital map or not. Real world information associated with an object is either captured as attribute of the object or attributes of sub-objects. This real world information describes certain features and/or functions of the object. Parts of this information are sufficient to assign the object to an object class which represents some sort of concept suitable for traffic and telematic applications. The area within which the object in the receiving digital map should be located is known (by the co-ordinates of the object within the sending digital map). Of course, the used co-ordinate system must be agreed upon between sender and receiver. In some cases more than one object of a certain object class maybe located within the search area of the receiving digital map. Therefore, some additional information must be supplied to make the object unique within the possible set of objects of this class. This part of information is called descriptor.

With regard to the location reference as defined before the following can be concluded:
- An object is either in the digital map or not.
- Referencing an object by its attributes can become difficult considering the fact that variations of the data model and/or certain attribute values are possible.
- The position of an object may vary between digital maps, due to the capturing process. Therefore, location reference must support a spatial range query based on a given position in order to determine the existence and allow the presentation of the requested object. Actually the method for location reference according to the invention is based on the following proposition:

An Object Instance, i.e. a single object:
- belongs to exactly one object class
- has a position within a given digital map (which is its location)
- has attributes of its own or attributes of its sub-objects, allowing for classification according to object classes suitable for traffic and telematic applications.
- some or all attributes of an object refer to real world information.

The process of SPOT location reference between digital maps can be divided into three steps:
Generate the location reference instance, i.e. create a code consisting of a positional part, a classification part, and a descriptive part, for some geographic phenomena stored as an object in a digital map. (in order to compact the location reference)
Transmit the location reference instance, i.e. the above mentioned code
   (via any transmission media)
   Verify the location reference instance, i.e. decode the transmitted code and interpret its contents in order to verify the presence of an object representing the same geographic phenomena as intended by the creator of the location reference instance.
   (Find and present the object being referred to)
   Verifying a location reference is a combination of retrieval methods of objects in digital maps. In order to determine the same geographic phenomena in a digital map of another map producer, the following components of a location reference instance will be generated,
   transmitted and verified:
   POSITION: is the spatial description of a geographic phenomena stored in an object in terms of co-ordinates of an agreed upon co-ordinate system (e.g. WGS 84). The spatial description maybe reduced to a single co-ordinate, since the accompanying object class reveals the actual geometric representation, i.e. point, line, area. The position will be used to determine the centre of a search area in the verifying digital map.
   - OBJECT CLASS:: is the representation of a group of objects, all satisfying a certain concept applicable within traffic and telematic applications. Each object class will be coded for efficient transmission of a location reference instance. The definition of an object class and its code must be agreed upon between sender and receiver. It is advisable to define object classes which are based on doubtless information of reality (e.g. an Autobahn in Germany is determined by the officially assigned code "A" followed by a number). An object class is the abstract generalisation of objects regardless of the data structure or data model used.
   - DESCRIPTOR:: is part of common information of an object (e.g. a street name). The common information to be used in a location reference instance is determined by the object class. For efficient transmission of the location reference instance, the descriptor may either be coded or represent only a small portion of the common information.

The SPOT location reference method is now further described using several steps.

Generation of a location reference instance:

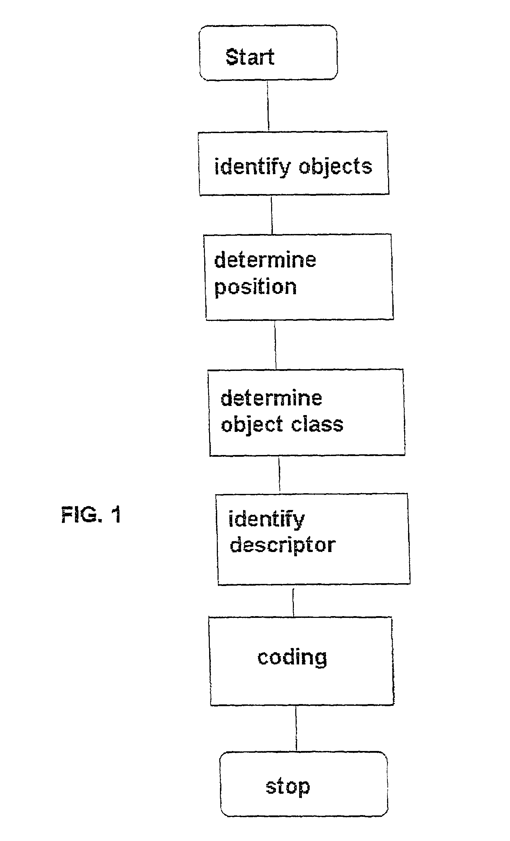

In digital map A: This is the digital map being used to create the location reference instance of an object x (see flow chart according to Figure 1):
- Identify the object x which shall be referenced
- Determine the object class of object x
- Determine the position of the object x by its coordinates
- Identify the descriptor of the object x
- Code the position, the object class and the descriptor into an agreed upon physical format.

Transmission of a location reference instance:
- Transmit this code.

Verify the location reference instance:

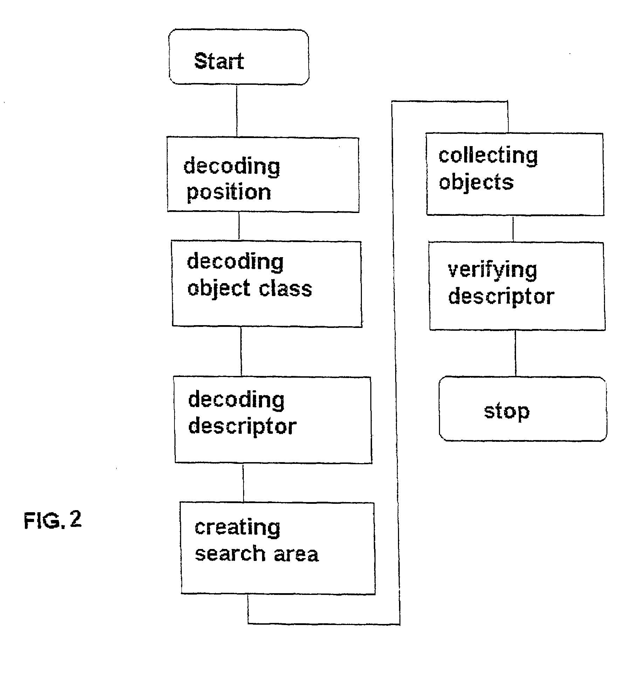

In digital map B: This is the digital map being used to present the location which is being referred to (see flow chart according to Figure 2):
- Decode into position, the object class and the descriptor from the physical format into the system format
- Determine the centre of a search area by the decoded co-ordinates
- Search the digital map for objects representing the geographic phenomena being coded in the location reference instance:
   Create the search area determined by the object class with a centre at the decoded position of the location reference instance. The digital map B is now split into two parts, the complete digital map and a small area within, being the search area. In the next steps only the content of the search area is of interest.
   In most cases several objects of various object classes will be present in the search area. Determine for each object in the search area whether it belongs to the object class of the location reference instance or not.
   Those objects which are not part of the object class of the location reference instance are being neglected. All objects which are within the search area are collected. If more than one object of the object class of the location reference instance has been found, compare each of these objects with the descriptor of the location reference instance (verification of the decoded/given descriptor with attributes or parts thereof of the collected objects). The object that matches the descriptor represents the geographical phenomena being referenced within digital map A in the receiving digital map B.

Within traffic and telematics applications the method according to the invention will be applicable as communication means between service provider and user. On behalf of the receiver a navigation system is perfectly well suited to make use of the shown method. Additional databases or look-up tables to keep location codes become obsolete. Digital map producers who provide maps for navigation systems do no longer need to store predefined codes to enable traffic and telematic services to refer to a certain object within the digital map of the navigation system. In general the described method can be implemented whenever location referencing of objects between similar digital maps is needed. The method allows to transfer the reference information of an object through low bandwidth transmission media.

### References:

[1] ENV ISO 14825 "Geographic Data File (GDF) 3.0"; Digital Map Database Standard (data model, data dictionary, exchange format), CEN/TC278; 12 October 1995.
[2] Ralf Duckeck, Volker Hiestermann, Hugh Milton, Kees Wevers: "Rules for defining and referencing an Intersection Location (ILOC}; Detailed Location Referencing (DLR) for ITS based on ILOCs's; draft report of ERTICO Committee on Location Referencing, Version 0.8; Brussels, Belgium; 14 April 1998.

## Claims

1. Method for generating a location reference instance within a digital map comprising the steps of:
- identifying an object to be referenced,
- determining the position of the object by its co-ordinates within the map,
- determining the object class of the object,
- identifying a descriptor of the object from common information stored in attributes, to verify the actual object in case more than one object satisfies a spatial range criteria and belongs to the same object class,
- coding the position of the object, the object class and the descriptor in a given format, **characterized by**:
- decoding the position, the object class and the descriptor of the location reference data into a given system format, which can be different from the given format,
- creating a search area dependent or independent of the decoded object class with a centre at the co-ordinates of the decoded position,
- collecting all objects which are within the search area and within the decoded object class,
- verifying the decoded/given descriptor with attributes or parts thereof of the collected objects.

2. Method according to claim 1 **characterized by** further comprising the step of transmitting the coded position of the object, the object class and the descriptor in a given format via a given transmission media.

3. Method according to at least one of claims 1 and 2 further comprising the steps of:
- defining object classes which are suitable for traffic and telematic applications and based on doubtless information of reality, which doubtless information of reality consists of an assigned code agreed upon between coding and decoding side,
- assigning objects to object classes suitable for traffic and telematic applications and based on doubtless information of reality from all or some attributes of an object or related objects.

4. Method according to at least one of claims 1 to 3 further comprising the steps of:
- pre-processing a digital map by explicitly identifying object classes suitable for traffic and/or telematic applications and being based on doubtless information of reality from all or some attributes of an object or related objects to an attribute of such a classified object, which doubtless information of reality consists of an assigned code agreed upon between coding and decoding side.

## Patentansprüche

1. Verfahren zum Erzeugen einer Ortsbezugsinstanz in einer digitalisierten Karte, umfassend die Schritte:
- Identifizieren eines Objekts, auf das Bezug genommen werden soll,
- Bestimmen der Position des Objekts durch seine Koordinaten in der Karte,
- Bestimmen der Objektklasse des Objekts,
- Identifizieren eines Deskriptors des Objekts aus allgemein verbreiteter Information, die in Attributen gespeichert ist, um in dem Fall, dass mehr als ein Objekt ein Raumbereichskriterium erfüllt und zu derselben Objektklasse gehört, das tatsächliche Objekt zu verifizieren,
- Codieren der Position des Objekts, der Objektklasse und des Deskriptors in einem gegebenen Format, **gekennzeichnet durch**:
- Decodieren von Position, der Objektklasse und des Deskriptors der Ortsbezugsdaten in ein gegebenes Systemformat, das von dem gegebenen Format verschieden sein kann,
- Erzeugen eines von der decodierten Objektklasse abhängigen oder unabhängigen Suchbereich mit einem Mittelpunkt an den Koordinaten der decodierten Position,
- Sammeln von allen Objekten, die sich im Suchbereich und in der decodierten Objektklasse befinden,
- Verifizieren des decodierten/gegebenen Deskriptors mit Attributen oder Teilen davon von den gesammelten Objekten.

2. Verfahren nach Anspruch 1, **dadurch gekennzeichnet, dass** es weiter den Schritt umfasst: Übertragen der codierten Position des Objekts, der Objektklasse und des Deskriptors in einem gegebenen Format über ein gegebenes Übertragungsmedium.

3. Verfahren nach mindestens einem der Ansprüche 1 und 2, weiter umfassend die Schritte:
- Definieren von Objektklassen, die für Verkehrs- und Telematikanwendungen geeignet sind und auf zweifelsfreier Tatsacheninformation beruhen, welche zweifelsfreie Tatsacheninformation aus einem zugewiesenen Code besteht, der zwischen codierender und decodierender Seite vereinbart wurde,
- Zuweisen von Objekten zu Objektklassen, die für Verkehrs- und Telematikanwendungen geeignet sind und auf zweifelsfreier Tatsacheninformation von allen oder einigen Attributen eines Objekts oder in Beziehung stehenden Objekten beruhen.

4. Verfahren nach mindestens einem der Ansprüche 1 bis 3, weiter umfassend die Schritte:
- Vorverarbeiten einer digitalisierten Karte durch explizites Identifizieren von Objektklassen, die für Verkehrs- und/oder Telematikanwendungen geeignet sind und die auf zweifelsfreier Tatsacheninformation von allen oder einigen Attributen eines Objekts oder in Beziehung stehenden Objekten beruhen, zu einem Attribut von einem solchen klassifizierten Objekt, welche zweifelsfreie Tatsacheninformation aus einem zugewiesenen Code besteht, der zwischen codierender und decodierender Seite vereinbart wurde.

## Revendications

1. Procédé de génération d'une instance de référence d'emplacement sur une carte numérique, comprenant les étapes qui consistent à :
- identifier un objet à référencer ;
- déterminer la position de l'objet par ses coordonnées sur la carte ;
- déterminer la classe d'objets de l'objet ;
- identifier un descripteur de l'objet à partir d'informations communes stockées dans des attributs, pour vérifier l'objet réel dans le cas dans lequel plus d'un objet satisfont à un critère d'intervalle spatial et appartiennent à la même classe d'objets ;
- coder la position de l'objet, la classe d'objets et le descripteur dans un format donné ;
**caractérisé par** les étapes qui consistent à :
- décoder la position, la classe d'objets et le descripteur des données de référence d'emplacement en un format de système donné, qui peut être différent du format donné ;
- créer une zone de recherche dépendante ou indépendante de la classe d'objets décodée, dont le centre est placé au niveau des coordonnées de la position décodée ;
- collecter tous les objets qui se trouvent à l'intérieur de la zone de recherche et à l'intérieur de la classe d'objets décodée ;
- vérifier le descripteur décodé/donné avec des attributs ou des parties d'attributs des objets collectés.

2. Procédé selon la revendication 1, **caractérisé en ce qu'**il comprend, en outre, l'étape qui consiste à transmettre la position de l'objet, la classe d'objets et le descripteur, codés dans un format donné, par l'intermédiaire d'un support de transmission.

3. Procédé selon au moins l'une des revendications 1 et 2, comprenant, en outre, les étapes qui consistent à :
- définir des classes d'objets qui sont appropriées pour des applications de trafic et de télématique, et qui se fondent sur des informations incontestables concernant la réalité, lesquelles informations incontestables concernant la réalité se présentant sous la forme d'un code attribué, convenu entre le côté codage et le côté décodage ;
- attribuer des objets aux classes d'objets appropriées pour les applications de trafic et de télématique, et qui se fondent sur des informations incontestables concernant la réalité, à partir de la totalité ou de certains des attributs d'un objet ou d'objets associés.

4. Procédé selon au moins l'une des revendications 1 à 3, comprenant, en outre, les étapes qui consistent à :
- pré-traiter une carte numérique en identifiant de manière explicite les classes d'objet appropriées pour les applications de trafic et/ou de télématique et se fondant sur des informations incontestables concernant la réalité, à partir de la totalité ou de certains des attributs d'un objet ou d'objets associés à un attribut de cet objet classifié, lesquelles informations incontestables concernant la réalité se présentant sous la forme d'un code attribué, convenu entre le côté codage et le côté décodage.
